# EUROPÄISCHE PATENTSCHRIFT

(11) **EP 3 390 190 B1**
(45) Veröffentlichungstag und Bekanntmachung des Hinweises auf die Patenterteilung: **03.07.2019**
(21) Anmeldenummer: 16798638.9
(22) Anmeldetag: 21.11.2016
(51) Int. Cl.: B60W 50/10, B60W 30/12, B60W 30/16

(54) **VERFAHREN ZUM DEAKTIVIEREN EINER AUTOMATISIERTEN FAHRFUNKTION EINES FAHRZEUGS UND FAHRERASSISTENZSYSTEM ZUR DURCHFÜHRUNG DES VERFAHRENS**
METHOD FOR DEACTIVATING AN AUTOMATED DRIVING FUNCTION OF A VEHICLE AND DRIVER ASSISTANCE SYSTEM FOR IMPLEMENTING THE METHOD
PROCÉDÉ PERMETTANT DE DÉSACTIVER UNE FONCTION AUTOMATISÉE DE CONDUITE D'UN VÉHICULE ET SYSTÈME D'AIDE À LA CONDUITE PERMETTANT LA MISE EN OEUVRE DU PROCÉDÉ

(30) Priorität: 19.12.2015 DE 102015016597; 14.06.2016 DE 102016007187
(43) Veröffentlichungstag der Anmeldung: 24.10.2018
(73) Patentinhaber: Daimler AG, 70327 Stuttgart (DE)
(72) Erfinder: BRAUNAGEL, Christian, 70178 Stuttgart (DE); SCHÖNENBERG, Thorben, 72810 Gomaringen (DE)
(74) Vertreter: JENSEN & SON
(86) Internationale Anmeldenummer: PCT/EP2016/001962
(87) Internationale Veröffentlichungsnummer: WO 2017/102057

(56) Entgegenhaltungen:
- DE-A1- 10 144 797
- DE-A1-102006 057 842
- DE-A1-102012 112 442
- US-A1- 2013 060 413
- US-A1- 2014 018 993
- US-A1- 2014 303 827

## Beschreibung

Die Erfindung betrifft ein Verfahren zum Deaktivieren einer automatisierten Fahrfunktion eines Fahrzeugs gemäß dem Oberbegriff des Patentanspruchs 1 sowie ein Fahrerassistenzsystem gemäß dem Oberbegriff des Patentanspruchs 8.

Ein gattungsgemäßes Verfahren ist beispielsweise aus der DE 102006057842 A1 bekannt. Bei diesem Verfahren wird eine Fahrfunktion zur Vermeidung von Seitenkollisionen eines Fahrzeugs mit seitlichen Objekten automatisiert durchgeführt. Der Fahrer des Fahrzeugs kann aber die kollisionsvermeidende Fahrfunktion unterbrechen, indem er ein Lenkrad, ein Fahrpedal oder ein Bremspedal des Fahrzeugs in einem eine Deaktivierungsschwelle übersteigenden Ausmaß betätigt. Nachteilig ist hierbei, dass der Fahrer die Fahrfunktion auch durch eine versehentliche Betätigung des Lenkrads, des Bremspedals oder Fahrpedals deaktivieren kann und damit keine Systemunterstützung zur Kollisionsvermeidung mehr erhält.

Der Erfindung liegt die Aufgabe zugrunde, ein Verfahren gemäß dem Oberbegriff des Patentanspruchs 1 anzugeben, mit dem sich versehentliche Deaktivierungen einer automatisierten Fahrfunktion vermeiden lassen. Der Erfindung liegt ferner die Aufgabe zugrunde, ein entsprechendes Fahrerassistenzsystem anzugeben.

Die Aufgabe wird durch die Merkmale des Patentanspruchs 1 bzw. durch die Merkmale des Patentanspruchs 8 gelöst.

Vorteilhafte Ausgestaltungen und Weiterbildungen ergeben sich aus den Unteransprüchen.

Beim erfindungsgemäßen Verfahren zum Deaktivieren einer automatisierten Fahrfunktion eines Fahrzeugs, insbesondere einer hochautomatisierten oder autonomen Fahrfunktion, ist vorgesehen, dass ein Fahrer des Fahrzeugs durch einen Fahrereingriff, insbesondere durch einen Lenkeingriff oder durch einen Pedaleingriff, beispielsweise durch einen Bremspedaleingriff oder Fahrpedaleingriff, eine Deaktivierung der Fahrfunktion bewirken kann. Die Fahrfunktion wird dabei dann deaktiviert und die Fahraufgabe mithin an den Fahrer übergeben, wenn der Fahrereingriff eine Deaktivierungsschwelle übersteigt, wobei die Deaktivierungsschwelle in Abhängigkeit der Betriebsdauer der Fahrfunktion, d.h. in Abhängigkeit der Zeitdauer, die seit der Aktivierung der Fahrfunktion verstrichen ist, vorgegeben wird. Alternativ oder zusätzlich kann die Deaktivierungsschwelle auch in Abhängigkeit der Reaktionsfähigkeit des Fahrers vorgegeben werden. Der Begriff "Reaktionsfähigkeit" wird vorliegend gleichbedeutend mit den Begriffen "Aufmerksamkeit" oder "Bereitschaft des Fahrers zur Übernahme der Fahraufgabe" verwendet, denn die Reaktionsfähigkeit des Fahrers ist umso höher, je höher die Aufmerksamkeit des Fahrers ist bzw. je höher die Bereitschaft des Fahrers zur Übernahme der Fahraufgabe ist.

Die Deaktivierungsschwelle ist somit variierbar und wird durch ihre Variation an den Betriebszustand des Fahrzeugs, nämlich an die Betriebsdauer der Fahrfunktion, bzw. an Zustand des Fahrers angepasst.

In einer vorteilhaften Weiterbildung des Verfahrens wird die Deaktivierungsschwelle derart vorgegeben wird, dass sie unmittelbar nach der Aktivierung der Fahrfunktion höher ist als einige Zeit danach.

In einer weiteren vorteilhaften Weiterbildung des Verfahrens wird die Deaktivierungsschwelle derart vorgegeben, dass sie bei einer geringen Reaktionsfähigkeit des Fahrers höher ist als bei einer hohen Reaktionsfähigkeit des Fahrers.

Vorzugsweise wird die Deaktivierungsschwelle derart vorgegeben, dass sie mit zunehmender Zeitdauer seit der letzten Aktivierung der Fahrfunktion kontinuierlich bis auf einen vordefinierten Vorgabeschwellwert abnimmt.

Vorzugsweise wird die Deaktivierungsschwelle derart vorgegeben, dass sie während eines vorgebbaren Zeitfensters ab der Aktivierung der Fahrfunktion mindestens gleich einem Wert ist, der dem Fahrereingriff zum Zeitpunkt der Aktivierung der Fahrfunktion entspricht.

Ein Fahrerassistenzsystem für den hochautomatisierten oder autonomen Fahrbetrieb eines Fahrzeugs ist erfindungsgemäß derart eingerichtet, dass es das erfindungsgemäße Verfahren durchführt.

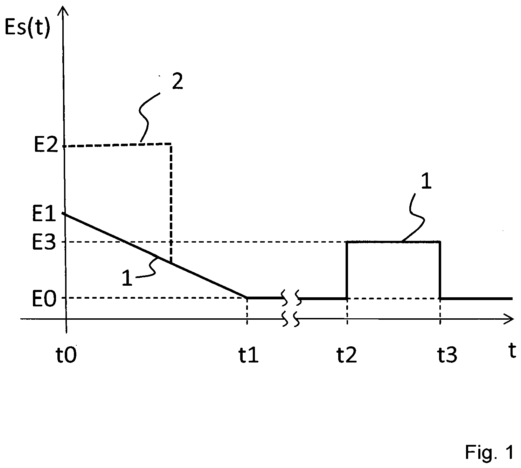

Die Erfindung wird nachfolgend anhand eines Ausführungsbeispiels unter Bezugnahme auf die einzige Figur näher beschrieben.

Die Figur zeigt den zeitlichen Verlauf einer Deaktivierungsschwelle einer automatisierten Fahrfunktion eines Fahrzeugs. Bei der automatisierten Fahrfunktion handelt es sich um eine Fahrerassistenzfunktion zur Unterstützung eines Fahrers des Fahrzeugs bei der Fahrzeugführung. Insbesondere handelt es sich hierbei um eine Längsregelfunktion, mit der beispielsweise eine Abstands- und Geschwindigkeitsregelung realisiert wird, und/oder um eine Querregelfunktion, mit der beispielsweise eine Spurhalteregelung realisiert wird. Insbesondere handelt es sich hierbei um eine Fahrfunktion zum längs- und quergeregelten Führen des Fahrzeugs während eines hochautomatisierten oder autonomen Fahrbetriebs.

Wenn der Fahrer diese ihn unterstützende Fahrfunktion aktiviert, übergibt er die Fahraufgabe an ein Fahrerassistenzsystem des Fahrzeugs, das zur Durchführung der Fahrfunktion eingerichtet ist. Wenn er danach durch einen Fahrereingriff in den Fahrbetrieb so stark eingreift, dass eine vorgebbare Deaktivierungsschwelle überschritten wird, wird die Fahrfunktion deaktiviert und die Fahraufgabe wird an den Fahrer zurück übergeben. Der Fahrer wird dabei optisch und akustisch und vorzugsweise zusätzlich auch haptisch über die Deaktivierung der Fahrfunktion informiert.

Beim Fahrereingriff handelt es sich um einen Lenkeingriff aufgrund einer Lenkradbetätigung oder um einen Pedaleingriff, beispielsweise um einen Bremseingriff aufgrund einer Bremspedalbetätigung oder um einen Fahrpedaleingriff aufgrund einer Fahrpedalbetätigung. Jedem dieser Eingriffe wird eine eigene Deaktivierungsschwelle zugeordnet. Das heißt, die Fahrfunktion wird deaktiviert, wenn der Fahrer durch die Fahrpedalbetätigung ein Antriebsmoment anfordert, das größer als die dem Fahrpedaleingriff zugeordnete Deaktivierungsschwelle ist, oder die Fahrfunktion wird deaktiviert, wenn der Fahrer durch die Bremspedalbetätigung ein Bremsmoment anfordert, das größer als die dem Bremseingriff zugeordnete Deaktivierungsschwelle ist, oder die Fahrfunktion wird deaktiviert, wenn der Fahrer durch die Lenkradbetätigung ein Lenkmoment anfordert, das betragsmäßig größer als die dem Lenkeingriff zugeordnete Deaktivierungsschwelle ist.

Nachfolgend wird die dem Fahrpedaleingriff zugeordnete Deaktivierungsschwelle näher beschrieben. Für den Bremspedaleingriff und den Lenkeingriff werden die zugeordneten Deaktivierungsschwellen analog dazu festgelegt.

Gemäß dem in der Figur gezeigten Diagramm ist auf der Abszisse die Zeit t und auf der Ordinate die Deaktivierungsschwelle Es(t) eingetragen. Vor einem ersten Zeitpunkt t0 ist die Fahrfunktion inaktiv und die Deaktivierungsschwelle Es(t) ist Undefiniert, d.h. sie kann einen beliebigen Wert annehmen und kann beispielsweise auf den Wert Null gesetzt werden.

Zum Zeitpunkt t0 wird die automatisierte Fahrfunktion vom Fahrer aktiviert. Die Deaktivierungsschwelle Es(t) wird zu diesem Zeitpunkt t0, nachfolgend auch Aktivierungszeitpunkt genannt, auf einen ersten Schwellwert E1 gesetzt, sofern der Fahrer zu diesem Zeitpunkt t0 keinen Fahrpedaleingriff durchführt oder einen Fahrpedaleingriff durchführt, der so schwach ist, dass das hierdurch angeforderte Antriebsmoment unterhalb des ersten Schwellwerts E1 liegt. Der erste Schwellwert E1 ist dabei um einen ersten vorgebbaren Adaptionswert ΔE1 größer als ein vordefinierter Vorgabeschwellwert E0, d.h. es gilt E1 = E0 + ΔE1. Hintergrund für die Vorgabe des Adaptionswerts ΔE1 ist, dass bei der Aktivierung der automatisierten Fahrfunktion typischerweise Fahrpedaleingriffe, Bremspedaleingriffe und Lenkeingriffe eines Fahrers vorliegen, da der Fahrer kurz zuvor noch selbständig die Fahraufgabe ausgeführt hat.

Anschließend wird die Deaktivierungsschwelle Es(t) innerhalb eines vorgegebenen Zeitfensters t0 bis t1 auf den Vorgabeschwellwert E0 reduziert und danach auf diesem Wert konstant gehalten. Die durchgezogene Kurve 1 verdeutlicht diesen Verlauf.

Wie anhand der Kurve 1 gezeigt, wird die Deaktivierungsschwelle Es(t) im vorliegenden Ausführungsbeispiel linear vom ersten Schwellwert E1 auf den Vorgabeschwellwert E0 reduziert. Denkbar sind aber auch Ausführungsbeispiele bei denen diese Abnahme nichtlinear ist oder bei denen die Deaktivierungsschwelle Es(t) zunächst konstant gehalten wird und dann progressiv, linear oder nicht linear, auf den Vorgabeschwellwert E0 reduziert wird, oder bei denen die Deaktivierungsschwelle Es(t) im gesamten Zeitfenster t0 bis t1 konstant gehalten wird und erst zum Zeitpunkt t1 sprungartig auf den Vorgabeschwellwert E0 reduziert wird.

Wie bereits ausgeführt gilt der durch die Kurve 1 dargestellte Verlauf für den Fall, dass der Fahrer zum Aktivierungszeitpunkt t0 keinen Fahrpedaleingriff durchführt oder nur einen schwachen Fahrpedaleingriff durchführt, bei dem der erste Schwellwert E1 nicht überschritten wird. Wenn der Fahrer zum Aktivierungszeitpunkt t0 hingegen einen Fahrpedaleingriff durchführt, bei dem das angeforderte Antriebsmoment den ersten Schwellwert E1 übersteigt, wird die Deaktivierungsschwelle Es(t) zum Zeitpunkt t0 auf einen zweiten Schwellwert E2 gesetzt. Der zweite Schwellwert E2 entspricht dabei dem vom Fahrer zum Aktivierungszeitpunkt t0 angeforderten Antriebsmoment zuzüglich eines Offsets. Der Offset wird vorgebeben, um die Robustheit des Verfahrens gegenüber Signalrauschen und gegenüber unbewussten Schwankungen des vom Fahrer durchgeführten Fahrpedaleingriffs zu erhöhen. Die Deaktivierungsschwelle Es(t) wird, wie durch die gestrichelte Linie 2 dargestellt, solange auf diesem zweiten Schwellwert E2 gehalten, solange der Fahrpedaleingriff andauert. Nach Beendigung des Fahrpedaleingriffs wird die Deaktivierungsschwelle Es(t) auf den durch die durchgezogene Linie 1 dargestellten Wert reduziert.

In einer vorteilhaften Ausgestaltung des Verfahrens wird die Deaktivierungsschwelle Es(t) ab dem Zeitpunkt t1 nur solange auf dem Vorgabeschwellwert E0 konstant gehalten, solange die Reaktionsfähigkeit des Fahrers, d.h. seine Aufmerksamkeit oder seine Bereitschaft zur Übernahme der Fahraufgabe hoch ist. Wenn der Fahrer unaufmerksam ist, dann ist seine Reaktionsfähigkeit zur Übernahme der Fahraufgabe gering. Wenn dies, wie in der Figur gezeigt, zu einem Zeitpunkt t2 festgestellt wird, wird die Deaktivierungsschwelle Es(t) um einen reaktionsbedingten Adaptionswert ΔEr auf einen dritten Schwellwert E3 angehoben, d.h. es gilt E3 = E0 + ΔEr. Diese Anhebung bleibt solange bestehen, solange der Fahrer unaufmerksam ist. Wenn danach festgestellt wird, dass der Fahrer wieder aufmerksam ist, d.h. wenn seine Reaktionsfähigkeit wieder hoch ist, wird die Deaktivierungsschwelle Es(t) wieder auf den auf den Vorgabeschwellwert E0 reduziert. In der Figur geschieht dies zu einem Zeitpunkt t3.

Der reaktionsbedingte Adaptionswert ΔEr wird vorteilhafterweise in Abhängigkeit der Reaktionsfähigkeit des Fahrers, d.h. in Abhängigkeit seines Aufmerksamkeitszustandes vorgegeben. Je geringer die Reaktionsfähigkeit des Fahrers oder die Aufmerksamkeit des Fahrers ist, umso höher wird der reaktionsbedingte Adaptionswert ΔEr gesetzt und umso höher wird dann die Deaktivierungsschwelle Es(t) sein.

Die Reaktionsfähigkeit des Fahrers bzw. seine Aufmerksamkeit wird in herkömmlicher Weise durch Beobachtung des Fahrerverhaltens ermittelt. Beobachtet werden beispielsweise Fahrerbedienhandlungen an Bedieneinheiten des Fahrzeugs, insbesondere an Bedieneinheiten eines Navigationssystems, eines Telefonsystems oder eines Entertainmentsystems. Beobachtet werden insbesondere fahrfremde Bedienhandlungen, die die Aufmerksamkeit des Fahrers vom Fahrgeschehen stark ablenken, wie z.B. lesen und schreiben von Emails, Surfen im Internet, etc. Des Weiteren kann auch die Kopfhaltung und/oder das Blickverhalten des Fahrers mittels einer Kamera beobachtet werden, um festzustellen, wohin der Fahrer blickt und wohin er seine Aufmerksamkeit richtet und wie lange seine Blickabwendung von der Straße andauert oder um anhand des Lidschlags festzustellen, ob der Fahrer müde ist. Wird durch diese Beobachtung beispielsweise festgestellt, dass der Fahrer länger als eine vorgebbare Mindestzeitdauer nicht auf die Straße sondern auf ein Display blickt oder sich den Fahrzeuginsassen, insbesondere den Insassen auf der Rückbank zuwendet, oder eine Sitzposition eingenommen hat, die für die Übernahme der Fahraufgabe nicht adäquat ist, oder müde ist, dann wird davon ausgegangen, dass die Reaktionsfähigkeit des Fahrers und damit sein Bereitschaft zur Übernahme der Fahraufgabe gering ist, was dann erfindungsgemäß zur Erhöhung der Deaktivierungsschwelle Es(t) führt.

Im Ergebnis, wird die zur Deaktivierung der automatisierten Fahrfunktion definierte Deaktivierungsschwelle Es(t) an die Betriebsdauer der Fahrfunktion, d.h. an die seit der Aktivierung der Fahrfunktion verstrichene Zeitdauer, und an die Bereitschaft des Fahrers, die Fahraufgabe wieder zu übernehmen, angepasst und es wird dem Fahrer erschwert, die Fahrfunktion durch eine unbewusste oder unbeabsichtigte Aktion zu deaktivieren.

## Patentansprüche

1. Verfahren zum Deaktivieren einer automatisierten Fahrfunktion eines Fahrzeugs, wobei die Fahrfunktion durch einen Fahrereingriff eines Fahrers des Fahrzeugs deaktiviert wird, wenn der Fahrereingriff eine vorgebbare Deaktivierungsschwelle (Es(t)) übersteigt,
**dadurch gekennzeichnet, dass** die Deaktivierungsschwelle (Es(t)) in Abhängigkeit einer Betriebsdauer der Fahrfunktion und/oder in Abhängigkeit einer Reaktionsfähigkeit des Fahrers vorgegeben wird.

2. Verfahren nach Anspruch 1,
**dadurch gekennzeichnet, dass** die Deaktivierungsschwelle (Es(t)) derart vorgegeben wird, dass sie unmittelbar nach einer Aktivierung der Fahrfunktion höher ist als einige Zeit danach.

3. Verfahren nach einem der vorherigen Ansprüche,
**dadurch gekennzeichnet, dass** die Deaktivierungsschwelle (Es(t)) derart vorgegeben wird, dass sie bei einer geringen Reaktionsfähigkeit des Fahrers höher ist als bei einer hohen Reaktionsfähigkeit des Fahrers.

4. Verfahren nach Anspruch einem der vorherigen Ansprüche,
**dadurch gekennzeichnet, dass** die Deaktivierungsschwelle (Es(t)) derart vorgegeben wird, dass sie mit zunehmender Zeitdauer seit der Aktivierung der Fahrfunktion kontinuierlich bis auf einen vordefinierter Vorgabeschwellwert (E0) abnimmt.

5. Verfahren nach einem der vorherigen Ansprüche,
**dadurch gekennzeichnet**, die Deaktivierungsschwelle (Es(t)) derart vorgegeben wird, dass sie während eines vorgebbaren Zeitfensters ab der Aktivierung der Fahrfunktion mindestens gleich einem Wert (E2) ist, der dem Fahrereingriff zum Zeitpunkt der Aktivierung der Fahrfunktion entspricht.

6. Verfahren nach einem der vorherigen Ansprüche,
**dadurch gekennzeichnet, dass** der Fahrereingriff ein Pedaleingriff in eine Pedaleinrichtung des Fahrzeugs oder ein Lenkeingriff in eine Lenkeinrichtung des Fahrzeugs ist.

7. Verfahren nach einem der vorherigen Ansprüche,
**dadurch gekennzeichnet, dass** es in einem Fahrzeug während eines hochautomatisierten oder autonomen Fahrbetriebs angewendet wird.

8. Fahrerassistenzsystem für einen hochautomatisierten oder autonomen Fahrbetrieb eines Fahrzeugs,
**dadurch gekennzeichnet, dass** es zur Durchführung des Verfahrens nach einem der vorherigen Ansprüche eingerichtet ist.

## Claims

1. Method for deactivating an automated driving function of a vehicle,
wherein the driving function is deactivated by a driver intervention of a driver of the vehicle if the driver intervention exceeds a presettable deactivation threshold (Es(t)),
**characterised in that** the deactivation threshold (Es(t)) is preset as a function of an operation duration of the driving function and/or as a function of a reaction ability of the driver.

2. Method according to claim 1,
**characterised in that** the deactivation threshold (Es(t)) is preset in such a way that it is higher immediately after an activation of the driving function that some time later.

3. Method according to any of the preceding claims,
**characterised in that** the deactivation threshold (Es(t)) is preset in such a way that it is higher at a low reaction ability of the driver than at a high reaction ability of the driver.

4. Method according to any of the preceding claims,
**characterised in that** the deactivation threshold (Es(t)) is preset in such a way that it is continuously reduced to a predefined presetting threshold (E0) as the time since the activation of the driving function increases.

5. Method according to any of the preceding claims,
**characterised in that** the deactivation threshold (Es(t)) is preset in such a way that, during a presettable time window since the activation of the driving function, it is at least equal to a value (E2) corresponding to the driver intervention at the time of the activation of the driving function.

6. Method according to any of the preceding claims,
**characterised in that** the driver intervention is a pedal intervention into a pedal device of the vehicle or a steering intervention into a steering device of the vehicle.

7. Method according to any of the preceding claims,
**characterised in that** it is used in a vehicle during a highly automated or autonomous driving operation.

8. Driver assistance system for a highly automated or autonomous driving operation of a vehicle,
**characterised in that** it is adapted for carrying out the method according to any of the preceding claims.

## Revendications

1. Procédé de désactivation d'une fonction de conduite automatique d'un véhicule automobile, la fonction de conduite étant désactivée par une intervention du conducteur du véhicule automobile, lorsque l'intervention du conducteur dépasse un seuil de désactivation prédéfini (Es(t)), **caractérisé en ce que** le seuil de désactivation (Est(t)) étant prédéfini en fonction d'une durée de fonctionnement de la fonction de conduite et/ou en fonction d'une capacité de réaction du conducteur.

2. Procédé selon la revendication 1, **caractérisé en ce que** le seuil de désactivation (Est(t)) est défini de telle sorte qu'il soit supérieur à un certain moment directement après une activation de la fonction de conduite.

3. Procédé selon l'une quelconque des revendications, **caractérisé en ce que** le seuil de désactivation (Est(t)) est défini de telle sorte qu'il soit supérieur en cas de faible capacité de réaction du conducteur à celui lorsque la capacité de réaction du conducteur est élevée.

4. Procédé selon l'une des revendications précédentes, **caractérisé en ce que** le seuil de désactivation (Est(t)) est défini de telle sorte qu'il diminue jusqu'au seuil de consigne prédéfini (E0) à mesure que la durée temporelle augmente en continue depuis l'activation de la fonction de conduite.

5. Procédé selon l'une quelconque des revendications précédentes, **caractérisé en ce que** le seuil de désactivation (Est(t)) est défini de telle sorte qu'il soit au moins égal, pendant une fenêtre temporelle prédéfinie à partir de l'activation de la fonction de conduite, à une valeur (E2) qui correspond à l'intervention du conducteur au moment de l'activation de la fonction de conduite.

6. Procédé selon l'une quelconque des revendications précédentes, **caractérisé en ce que** l'intervention du conducteur est une intervention sur une pédale dans un dispositif formant pédale du véhicule ou une intervention de direction dans une direction du véhicule automobile.

7. Procédé selon l'une quelconque des revendications précédentes, **caractérisé en ce qu'**il est utilisé dans un véhicule automobile pendant une condition de fonctionnement autonome ou hautement automatisée.

8. Système d'assistance au conducteur pour une condition de fonctionnement autonome ou hautement automatisée d'un véhicule automobile, **caractérisé en ce qu'**il est conçu pour exécuter le procédé selon l'une des revendications précédentes.
